# EUROPEAN PATENT SPECIFICATION

(11) **EP 1 805 995 B1**
(45) Date of publication and mention of the grant of the patent: **25.07.2018**
(21) Application number: 05819521.5
(22) Date of filing: 27.10.2005
(51) Int. Cl.: H04N 19/196, H04N 19/61, H04N 19/40, H04N 19/59

(54) **METHOD FOR GENERATING MULTIPLE TRANSCODED OUTPUTS BASED ON A SINGLE VIDEO INPUT**
VERFAHREN ZUR ERZEUGUNG MEHRERER TRANSKODIERTEN AUSGÄNGE AUS EINEM EINZELNEN VIDEOEINGANGSSIGNAL
PROCEDE DE GENERATION DE SORTIES TRANSCODEES MULTIPLES SUR LA BASE D'UN UNIQUE SIGNAL VIDEO D'ENTREE

(30) Priority: 27.10.2004 US 975244
(43) Date of publication of application: 11.07.2007
(73) Proprietor: HEWLETT-PACKARD DEVELOPMENT COMPANY, L.P., Houston, TX 77070 (US)
(72) Inventor: SHEN, Bo, Palo Alto, California 94304 (US); TROTT, Mitchell, Palo Alto, California 94304 (US)
(74) Representative: Zimmermann, Tankred Klaus
(86) International application number: PCT/US2005/039679
(87) International publication number: WO 2006/047792

(56) References cited:
- EP-A- 1 217 841
- WO-A-2004/049722
- US-A1- 2004 202 250
- US-A1- 2004 208 247
- Chi-Hung Chi ET AL: "Pervasive Web Content Delivery with Efficient Data Reuse", 7th International Workshop on Web Content Caching and Distribution (IWCW), 14 August 2002 (2002-08-14), 16 August 2002 (2002-08-16), pages 1-16, XP55017603, Boulder, Colorado, US Retrieved from the Internet: URL:http://web.archive.org/web/20040726072 942/http://2002.iwcw.org/papers/18500120.p df [retrieved on 2012-01-26]

## Description

### TECHNICAL FIELD

Embodiments of the present invention relate to the field of data transcoding. Specifically, embodiments of the present invention relate to a method for generating multiple transcoded outputs based on a single input.

### BACKGROUND ART

Portable electronic devices, such as cellular telephones, personal digital assistants (PDAs), and laptop computers, are increasingly able to present video content to users. Often, the video content is from a live source or a broadcast source, and is wirelessly transmitted to the portable electronic device for presentation. Due to the typical screen size and bit rate formats of typical portable electronic devices, the video content is adapted to suit the device and network attributes of the receiving portable electronic devices. One method for adapting video content to suit a wide array of networks and client devices is transcoding. Transcoding adapts media data for viewing in different formats by adjusting device and network attributes such as the screen size output and the bandwidth. Essentially, transcoding adjusts the video according to the characteristics of the viewing device.

Due to the wide array of different types of portable electronic devices, it is typically necessary to transcode the video for each type of electronic device to which the video is transmitted. Currently, a typical transcoder initiates a different transcoding session for each type of viewing device. Although the transcoder is transcoding the video from the same source, each transcoding session is performed independently. The different transcoding sessions have various computational loads. For example, one type of device may require a bit rate reduction while a second device type may require a screen resolution reduction, requiring a larger computational load. Moreover, the transcoding sessions may provide very similar video outputs, performing many of the same video processing operations on the same input video data.

In the described scenarios of live video transcoding or broadcast transcoding, in which one video source is requested by clients with many different device/connection capabilities, the source needs to be transcoded into multiple types of video output. The current technique of independently transcoding the video data into multiple outputs using separate transcoding sessions wastes computational capacity by performing redundant operations in the individual transcoding sessions. Moreover, the current technique may not be able to satisfy the scalability demand for transcoding services.

### DISCLOSURE OF THE INVENTION

The invention consists in a method for generating multiple transcoded outputs based on a single video input as defined in claim 1. A first transcoding session having first attributes is initiated, wherein the first transcoding session comprises a plurality of video processing operations. A second transcoding session having second attributes is initiated. Intermediate data associated with at least one the video processing operation of the first transcoding session is produced. The second transcoding session is performed, wherein the second transcoding session is based at least in part on the intermediate data.

### BRIEF DESCRIPTION OF THE DRAWINGS

The accompanying drawings, which are incorporated in and form a part of this specification, illustrate embodiments of the invention and, together with the description, serve to explain the principles of the invention:
FIGURE 1 illustrates a block diagram of a multi-output transcoding system, in accordance with an embodiment of the present invention.
FIGURE 2 illustrates a block diagram of exemplary decoding and encoding operations of a transcoding process, in accordance with an embodiment of the present invention.
FIGURE 3A illustrates a two-dimensional graph representation of two transcoding dimensions, in accordance with an embodiment of the present invention.
FIGURE 3B illustrates a three-dimensional graph representation of three transcoding dimensions, in accordance with an embodiment of the present invention.
FIGURE 4 illustrates a block diagram of an exemplary progressive reuse of discrete cosine transform (DCT) information in a multi-output transcoding process, in accordance with an embodiment of the present invention.
FIGURE 5 illustrates a block diagram of an exemplary progressive reuse of rate control information in a multi-output transcoding process, in accordance with an embodiment of the present invention.
FIGURE 6 illustrates a block diagram of an exemplary progressive reuse of quantization information in a multi-output transcoding process, in accordance with an embodiment of the present invention.
FIGURE 7 illustrates a block diagram of an exemplary progressive reuse of error frames information in drift correction in a multi-output transcoding process, in accordance with an embodiment of the present invention.
FIGURE 8 illustrates a flow chart of a process for generating multiple transcoded outputs based on a single input, in accordance with an embodiment of the present invention.

### BEST MODE FOR CARRYING OUT THE INVENTION

Reference will now be made in detail to various embodiments of the invention, examples of which are illustrated in the accompanying drawings. While the invention will be described in conjunction with these embodiments, it will be understood that they are not intended to limit the invention to these embodiments. On the contrary, the invention is defined by the appended claims. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

Aspects of the present invention may be implemented in a computer system that includes, in general, a processor for processing information and instructions, random access (volatile) memory (RAM) for storing information and instructions, read-only (non-volatile) memory (ROM) for storing static information and instructions, a data storage device such as a magnetic or optical disk and disk drive for storing information and instructions, a n optional user output device such as a display device (e.g., a monitor) for displaying information to the computer user, an optional user input device including alphanumeric and function keys (e.g., a keyboard) for communicating information and command selections to the processor, and an optional user input device such as a cursor control device (e.g., a mouse) for communicating user input information and command selections to the processor.

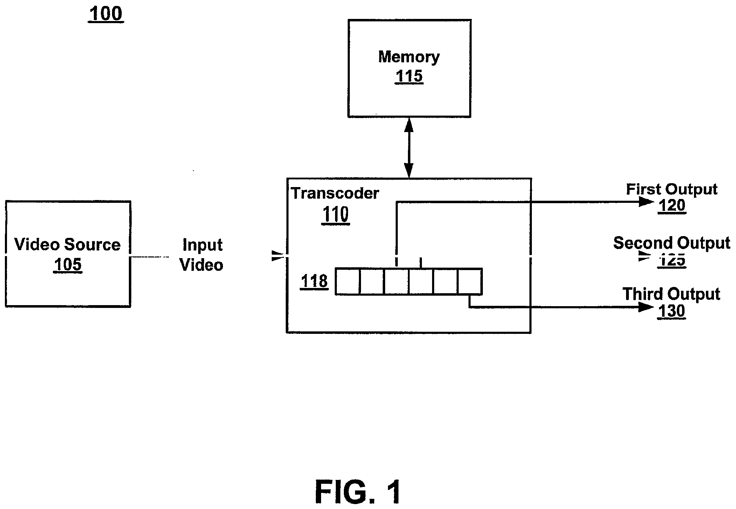

Figure 1 illustrates a block diagram of a multi-output transcoding system 100, in accordance with an embodiment of the present invention. Multi-output transcoding system 100 efficiently generates multiple transcoded video outputs from a single video input by reusing metadata, also referred to herein as intermediate data, across multiple transcoding sessions. Multi-output transcoding system 100 comprises video source 105, transcoder 110, and memory 115 for generating first output 120 and second output 125. It should be appreciated that multi-output transcoding system 100 can generate any number of outputs based on the single video source 105, e.g., third output 130. It should also be appreciated that multi-output transcoding system 100 may be implemented within a single computer system or within computer systems of a distributed computer network.

Video source 105 provides input video content to transcoder 110. In one embodiment, video source 105 is a live source, e.g., a live sporting event or live news conference. In another embodiment, video source 105 is a broadcast source, e.g., a television program or a movie. It should be appreciated that video source 105 may be any video source that provides video with a set start point, e.g., is a stored source or a broadcast source.

Transcoder 110 is configured to transcode input video content received from video source 105 according to the attributes associated with a particular type of device. Transcoder 110 receives a request for vid eo content from a device having particular attributes. Transcoder 110 performs a plurality of video processing operations 118 to generate an output video based on the attributes associated with the request. The attributes (also referred to herein as transcoding dimensions) include information describing the particular video input requirements of the associated device, including but not limited to: video format, screen size, frame rate, and bit rate. It should be appreciated that the attributes may also be based in part on the network attributes, e.g., network bandwidth.

In one embodiment, transcoder 110 receives a first request for video content associated with a first device having first attributes, and initiates a first transcoding session for transcoding the input video into a format for viewing on a first device having the first attributes. The first transcoding session includes a plurality of video processing operations 118 for transcoding the input stream into an output stream appropriate for viewing on the first device. Transcoder 110 is also operable to initiate a second transcoding session in response to a second request for video content associated with a second device having second attributes. The second transcoding session is based at least in part on intermediate data (e.g., metadata) associated with the first transcoding session.

In one embodiment, multi-output transcoding system 100 also includes memory 115 storing intermediate data associated with at least one said video processing operation of the first transcoding session. In one embodiment, memory 115 is random access (volatile) memory (RAM) coupled to transcoder 110. It should be appreciated that memory 115 may be any type of computer memory that allows data to be stored and read quickly (e.g., flash memory). It should be appreciated that multi-output transcoding system may operate without memory 115. For example, in a hardware implementation, such as a field programmable gate array (FPGA) or a digital signal processor (DSP), the intermediate data may be produced and reused without explicit storage of the intermediate data.

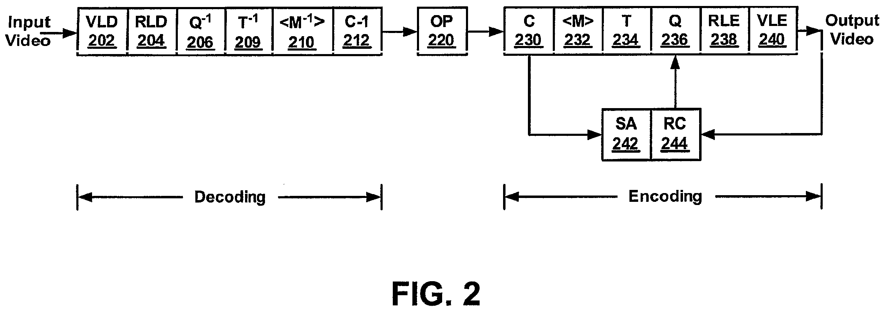

Figure 2 illustrates a block diagram of exemplary decoding and encoding operations of a transcoding process 200, in accordance with an embodiment of the present invention. Transcoding process 200 includes a decoding process (e.g., blocks 202 through 212) and an encoding process (e.g., blocks 230 through 244), with transcoding operation 220 in the middle. The blocks each represent video processing operations used in an exemplary transcoding process. It should be appreciated that the blocks shown are exemplary, and that transcoding process 200 may include different blocks, as well as fewer blocks or more blocks, depending on the video coding standards employed by transcoding process 200. I n general, metadata that can be useful for transcoding of motion compensation and DCT encoded video streams is identified. Embodiments of the present invention may use a Motion Pictures Experts Group (MPEG) standard (e.g., MPEG-1 or MPEG-4), an H.26x standard, or any other standard that uses motion compensation or DCT encoding.

Each block of transcoding process 200 generates metadata (e.g., intermediate data) for the associated video processing operation. The metadata may be stored in a memory (e.g., memory 115 of Figure 1). The decoding portion of transcoding process 200 includes a plurality of video processing operations for generating different metadata that can be stored and reused in another transcoding process. The m etadata that can be generated and stored by the following video processing operations includes:
- Variable length decoding (VLD) - Sequence level information, such as screen size of the input video, the input video bit rate; Picture level information, such as the picture coding type, the number of bits per picture; Macroblock level information, such as the macroblock coding type, motion vector, coded block pattern (CB P), and quantizer factor; and Block level information, such as run-length pair of quantized DCT coefficients.
- Run length decoding (RLD) - Quantized DCT coefficient in an NxN array, where NxN is the transform block size (e.g., N=4 for H.264 format, N=8 otherwise).
- Inverse quantization (Q⁻¹) - DCT coefficients in an NxN array.
- Inverse transformation (T⁻¹) - Pixel (or residual) value in NxN array.
- Motion compensation (M⁻¹) - YUV color space pixel value in frame buffer (this block is optional depending on whether the frame is intercoded).
- Inverse color transform (C⁻¹) - Red Green Blue (RGB) color space pixel values in the frame buffer.

The encoding portion of transcoding process 200 also includes a plurality of video processing operations for generating different metadata that can be stored and reused in another transcoding process. The metadata that can be generated and stored by the following video processing operations includes color transform (C), motion compensation (M), transformation (T), run length encoding (RLE), and variable length encoding (VLE). Other examples of the metadata that can be generated and stored by the following video processing operations includes:
- Quantization (Q) - Quantized DCT coefficients (after operation) in an NxN array; and the CBP.
- Spatial Activity (SA) - Spatial activity values in a macroblock array (e.g., given an NxM frame size, macroblock array is size of N/16 by M/16).
- Rate control (RC) - Quantization parameters in a macroblock array.

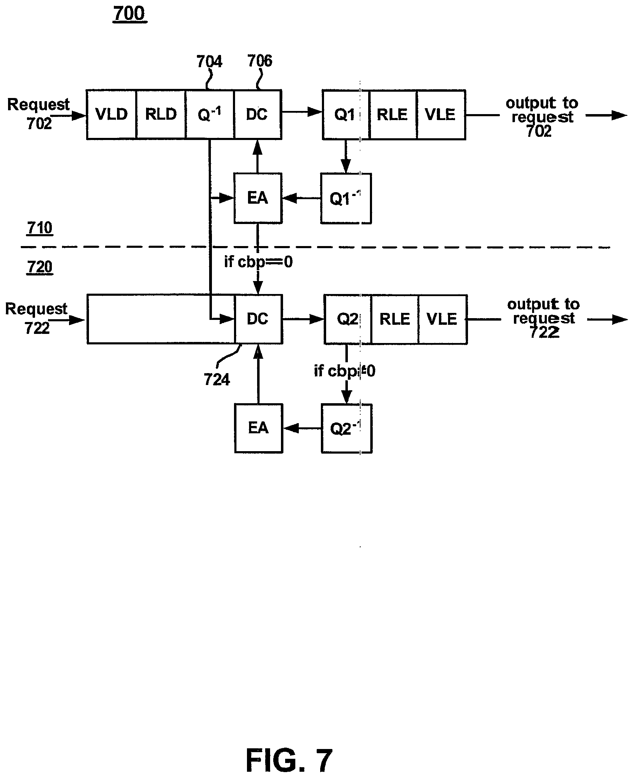

It should be appreciated that the above described video processing operations and corresponding metadata, in both the decoding and encoding portions, are exemplary and may include additional metadata. Furthermore, the above-described video processing operations store metadata because the reuse of the associated metadata is considered to be particularly useful. However, there may be additional video processing operations (e.g., drift correction and error accumulation) as described in Figure 7.

For example, a first transcoding session performs all the video processing blocks of transcoding process 200, and stores the metadata for each block. A second transcoding session with a different target format can selectively use the metadata produced in the decoding portion of the first transcoding session to feed into the encoding portion of the second transcoding session to produce a different output.

Embodiments of the present invention provide for th e reuse of intermediate data across multiple transcoding sessions, thereby reducing computational requirements on the transcoder (e.g., multi-output transcoding system 100 of Figure 1). Intermediate data generated during a transcoding session is saved in memory. Other transcoding sessions can access and retrieve the intermediate data. In order to efficiently store and reuse intermediate data, it is desirable to appropriately select which intermediate data to store.

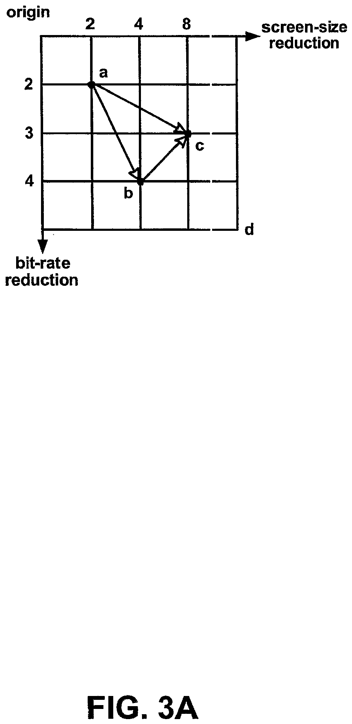

Figure 3A illustrates a two-dimensional graph representation of two transcoding dimensions, in accordance with an embodiment of the present invention. A grid point (e.g., a processing point) represents a compounded transcoding operation. A first operation a is to reduce screen size by a factor of two and bit rate by a factor of two. The second operation b is to reduce the screen size by a factor of four and the bit rate by a factor of four. The second operation can be progressively achieved based on the result of operation a.

The third operation c reduces the screen size by a factor of eight and the bit rate by a factor of three. Operation c can reuse the screen size reduction portion of the results from operation b while reusing the bit rate reduction part of operation a. Operation c cannot reuse the bit rate reduction part of operation b since the result from operation b has a lower bit rate. Also, while operation c can use the screen size reduction part of operation a, in one embodiment, operation c uses the screen size reduction part of operation b since it generates a smaller computing load than using that of operation a.

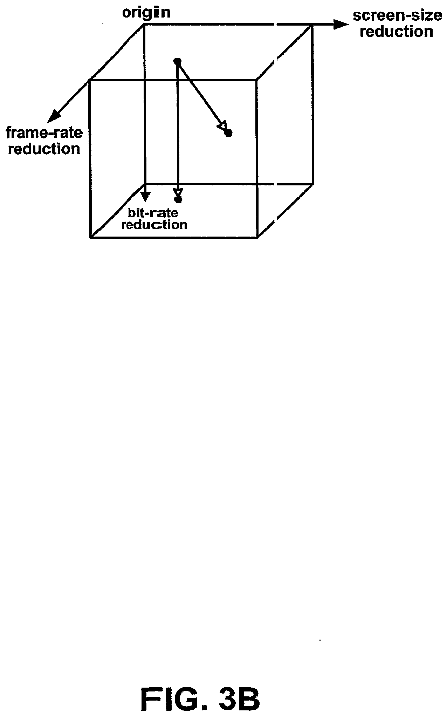

Adding another dimension, for example, frame rate reduction, changes the processing space to a three-dimensional processing space. Figure 3B illustrates a three-dimensional graph representation of three transcoding dimensions, in accordance with an embodiment of the present invention. A point (e.g., a processing point) represents a compounded transcoding operation. The same principles described at Figure 3A apply. In general, an operation can be progressively achieved based on the result of another operation that does not require a greater reduction. Also, an operation selects the operation part of another operation from which results are used in transcoding based on the smallest computational requirements.

It also may be beneficial to selectively determine which intermediate data to store. For example, for bit rate reduction, information regarding quantization results (e.g., CBP) at the smallest target bit rate level cannot be reused; therefore, there is no need to store it. For screen size reduction, DCT data at the smallest reduction level cannot be reused by any other transcoding session, and also is not stored. In general, for processing points farther from the origin, less metadata is stored (e.g., at processing point d of Figure 3A).

It should be appreciated that a transcoding session of a multi-output transcoding system (e.g., multi-output transcoding system 100 of Figure 1) can progressively reuse metadata from any other transcoding session. In one embodiment, the order in which the requests are received does not matter. For example, a transcoding session initiated in response to an earlier request can reuse intermediate data generated at a transcoding session initiated in response to a later request. When the later request is received, the multi-output transcoding system adjusts the transcoding sessions so that the later initiated transcoding session stores metadata for use by the earlier initiated transcoding session. This adjustment is made without interruption to users.

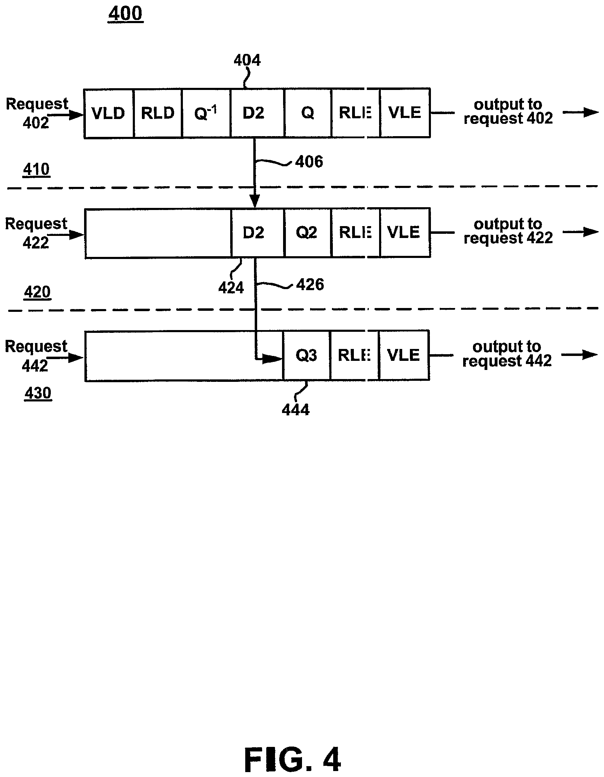

Figures 4, 5, 6 and 7 include examples of the progressive reuse of metadata at computing bottlenecks. The examples include multi-output transcoding processes that progress from left to right.

Figure 4 illustrates a block diagram of an exemplary progressive reuse of DCT information in a multi-output transcoding process 400, in accordance with an embodiment of the present invention. The reuse of DCT information provides for progressive screen size reduction. Multi-outp ut transcoding process 400 receives request 402 for downscaling the input video by a factor of two, and a first transcoding session 410 is initiated. A second request 422 is received for downscaling the input video by a factor of four, and a second transcoding operation 420 is initiated.

The metadata 406 associated with the downscaling operation (block 404) of the first transcoding operation may be reused in the second transcoding operation. Block 404 generates intermediate data of video data downscaled by a factor of two (D2), which is stored. Second transcoding operation 420 reads the stored metadata from block 404, and performs and additional downscaling by a factor of two. There is no need to perform the operations prior to block 424, therefore reducing the computational load on the transcoder. Furthermore, performing a downscaling by a factor of two is less costly operationally than downscaling by a factor of four.

Continuing with the example of multi-output transcoding process 400, a third request 442 is received for downscaling by a factor of four, and further changing the bit rate. Third transcoding session, initiated in response to third request 442, reads metadata 426 associated with block 424, and feeds metadata 426 into block 444, for changing the bit rate by using a different quantization factor. All operations performed prior to block 444 are saved, reducing computational load on the transcoder.

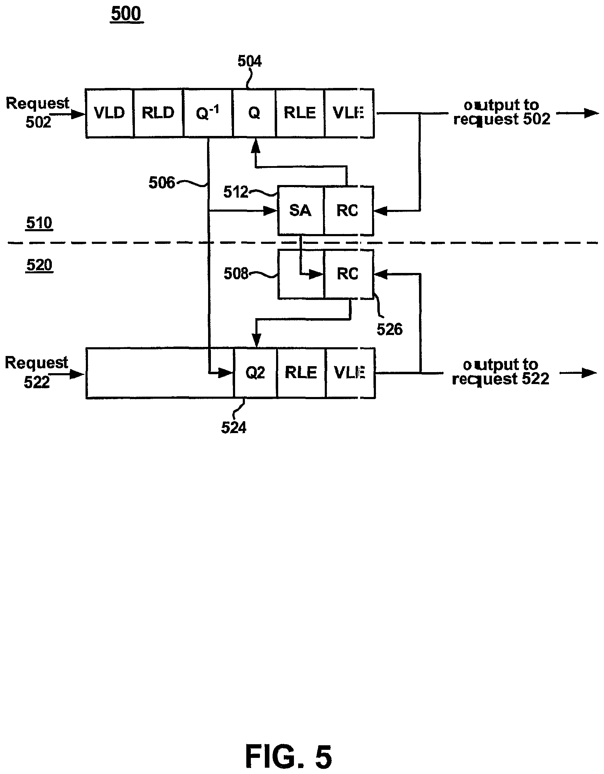

Figure 5 illustrates a block diagram of an exemplary progressive reuse of rate control information in a multi-output transcoding process 500, in accordance with an embodiment of the present invention. Rate control (RC) video processing operations use spatial activity (SA) calculated from the original frame to decide the assignment of quantization factors. In multi-output transcoding process 500, request 502 is received for adapting the bit rate according the quantization factor Q of block 504, and transcoding session 510 is initiated accordingly. Second request 522 is received for adapting the bit rate according to another quantization factor Q2 of block 524, and second transcoding session 520 is initiated accordingly.

The metadata 506 prior to the quantization operation of block 504 of transcoding process 510 is reused by second transcoding process 520. Metadata 506 is fed directly into block 524 for adapting the bit rate according to Q2. Moreover, metadata 508 generated at the spatial activity process of block 512 is reused in second transcoding process 520 and fed directly into block 526. As shown, for a multiple output transcoder, spatial activity can be reused for other sessions. For example, spatial activity calculated for bit rate reduction transcoding (e.g., transcoding session 510) can be reused by a transcoding (e.g., second transcoding session 520) to another bit rate reduction factor.

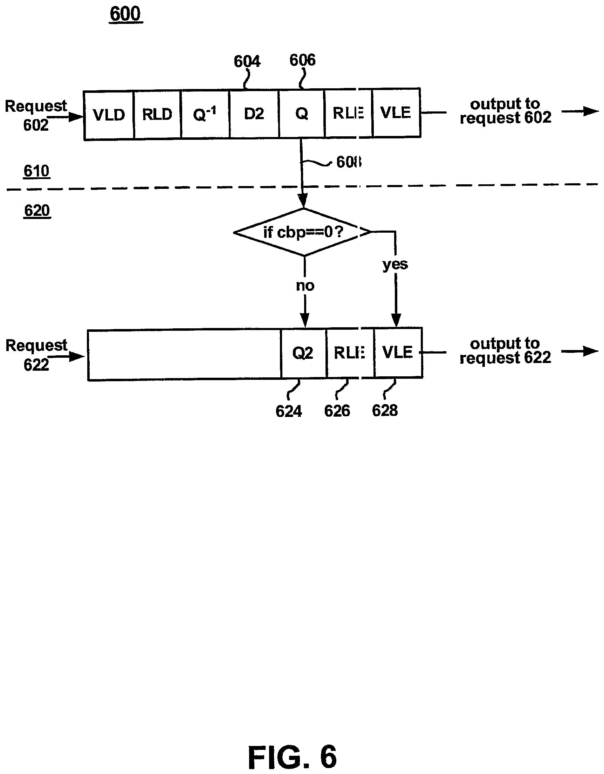

Figure 6 illustrates a block diagram of an exemplary progressive reuse of quantization information in a multi-output transcoding process 600, in accordance with an embodiment of the present invention. Metadata from the macroblock level reveals whether blocks in a macroblock are coded or not. For example, blocks may not be coded in frames having low bit rates, because the differences between the frames may be very small. In MPEG syntax this coding is referred to as the coded block pattern (CBP).

Multi-output transcoding process 600 receives request 602 for reducing the screen size according to downscaling factor D2 of block 604 and reducing the bit rate according to quantization factor Q of block 606. In response to request 602, transcoding session 610 is initiated. Second request 622 is received for reducing the screen size by the same downscaling factor D2 of request 602 and for reducing the bit rate by quantization factor Q2 of block 624. In response to request 622, second transcoding session 620 is initiated.

Second transcoding session 630 reuses metadata 608 generated at block 606. Metadata 608 includes the downscaled and bit rate reduced frame, as well as CBP information. Metadata 608 may be fed into block 624 for further quantization. However, if blocks are not coded (e.g., all coefficients of the block are zero) in one bit rate reduction transcoding, a more severe bit rate reduction transcoding (which leads to coarser quantization) can be achieved without any operation. In addition, no severe quantization is necessary since the quantization results will be zero anyway. This indicates that the quantization factor does not need to be modified, which results in saving in computing of the quantization factor as well as saving in bit budget for the output stream. Therefore, if the CBP is equal to zero, metadata 608 can be fed directly into block 628, because the processing of blocks 624 and 626 will produce a result of zero. The computational load of second transcoding session 620 is further reduced by not performing unnecessary operations.

Figure 7 illustrates a block diagram of an exemplary progressive reuse of error frames information in drift correction in a multi-output transcoding process 700, in accordance with an embodiment of the present invention. Drift correction typically requires reconstruction of pixel domain information so that an error frame can be produced which accumulates the error produced by transcoding each frame. Request 702 is received for reducing the bit rate, and second request 722 is received for further reducing the bit rate.

Second transcoding session 720 reuses metadata 708 generated at block 704, and feeds metadata 708 into block 724. Furthermore, Figure 7 shows the error frame from error accumulation (EA) operation of block 706 for the first transcoding session 710 can be reused by the second transcoding session 720 in the drift correction (DC) operation of block 724 if the second transcoding session 720 represents a more severe rate reduction transcoding and the CBP for the corresponding block is zero.

It should be appreciated that this can be extended to other types of transcoding where motion compensation (M⁻¹) is required in drift correction. Since the motion compensation is one of the most computing intensive tasks in transcoding sessions, the computational saving by reusing the error frame is more significant. Joint multi-output transcoding systems store the reconstructed pixel frame buffers in YUV format so that other transcoding sessions, which also require drift correction, can reuse the buffers. Typically, rate reduction and screen size reduction transcoding requires drift correction.

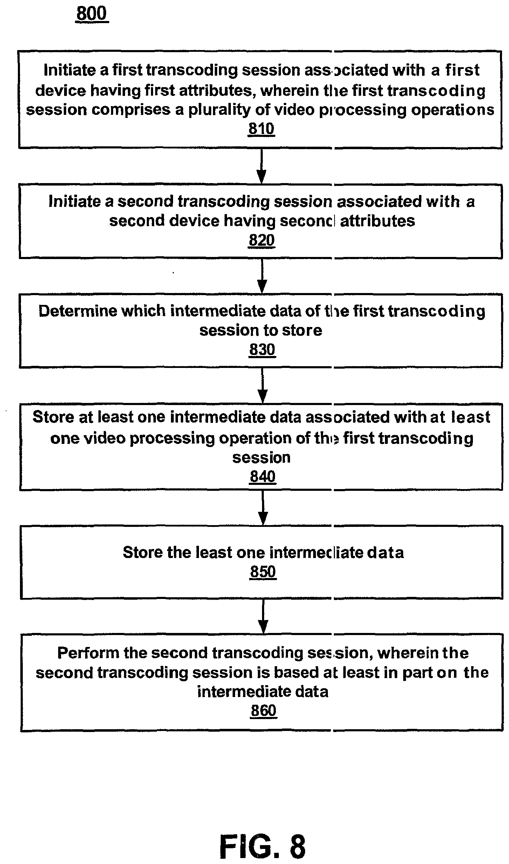

Figure 8 illustrates a flow chart of a process 800 for generating multiple transcoded outputs based on a single input, in accordance with an embodiment of the present invention. In one embodiment, process 800 is carried out by processors and electrical components (e.g., a computer system) under the control of computer readable and computer executable instructions, such as multi-output transcoding system 100 of Figure 1. Although specific steps are disclosed in process 800, such steps are exemplary. That is, the embodiments of the present invention are well suited to performing various other steps or variations of the steps recited in Figure 8.

At step 810 of process 800, a first transcoding session associated with a first device having first attributes is initiated, wherein the first transcoding session includes a plurality of video processing operations- At step 820, a second transcoding session associated with a second device having second attributes is initiated. In one embodiment, at least one of the second attributes is a progressive reduction of a corresponding first attribute. In one embodiment, the first attributes include a first screen size and a first bit rate and the second attributes include a second screen size and a second bit rate.

At step 830, it is determined which intermediate data of the first transcoding session to store. In one embodiment, intermediate data related to a progressive reduction of a first attribute to a second attribute is stored. At step 840, at least one intermediate data associated with at least one video processing operation of the first transcoding session is produced. At step 850, the intermediate data is stored. It should be appreciated that step 850 is optional. At step 860, the second transcoding session is performed, wherein the second transcoding session is based at least in part on the intermediate data.

In one embodiment, the first attribute is associated with a screen size reduction of a first downscaling factor and wherein the corresponding second attribute is associated with a screen size reduction of a second downscaling factor, wherein the second downscaling factor provides a greater screen size reduction than the first downscaling factor. In one embodiment, the intermediate data includes a result of a screen size reduction operation based on the first downscaling factor.

In another embodiment, the first attribute is associated with a bite rate reduction of a first bit rate reduction factor and wherein the corresponding second attribute is associated with a bit rate reduction of a second bit rate reduction factor, wherein the second bit rate reduction factor provides a greater bit rate reduction than the first bit rate reduction factor. In one embodiment, the intermediate data includes a result of a bit rate reduction operation based on the first bit rate reduction factor. In one embodiment, the intermediate data further includes a coded block pattern. In embodiment, performing the second transcoding session also includes determining whether the coded block pattern is substantially equal to zero, and, if the coded block pattern is substantially equal to zero, not performing drift correction and error accumulation on the intermediate data.

In another embodiment, the first attributes are associated with a screen size reduction of a first downscaling factor and a bite rate reduction of a first bit rate reduction factor and the corresponding second attributes are associated with a screen size reduction of a first downscaling factor and a bit rate reduction of a second bit rate reduction factor, wherein the second bit rate reduction factor provides a greater bit rate reduction than the first bit rate reduction factor. In one embodiment, the intermediate data includes a result of a bit rate reduction operation based on the first bit rate reduction factor and a coded block pattern. In embodiment, performing the second transcoding session also includes determining whether the coded block pattern is substantially equal to zero, and, if the coded block pattern is substantially equal to zero, not performing quantization on the intermediate data.

Various embodiments of the described invention provide a joint video transcoding method in which multiple outputs can be generated efficiently given a single input and requests for multiple output. Multiple outputs can be generated in multiple formats, multiple frame rates, multiple bits rates, and multiple screen sizes. Furthermore, the multiple outputs may be generated in an optimized fashion with the least amount of computing resources necessary.

Embodiments of the present invention, a method for generating multiple transcoded outputs based on a single input, are thus described. While the present invention has been described in particular embodiments, it should be appreciated that the present invention should not be construed as limited by such embodiments, but rather construed according to the following claims.

## Claims

1. A method for generating multiple transcoded outputs based on a single video input, said method comprising:
initiating (810) in response to receiving a first request for a first output to a first device a first transcoding session for transcoding the video input into a format for viewing on the first device having first attributes describing particular video input requirements of the first device, wherein said first transcoding session comprises a plurality of video processing operations including decoding video data, performing a transcoding operation and encoding the video data;
initiating (820) in response to receiving a second request for a second output to a second device a second transcoding session for transcoding the video input into a different format associated with the second device having second attributes describing the particular video input requirements of the second device;
producing (840) at least one intermediate data associated with said transcoding operation of said first transcoding session;
storing (850) the intermediate data; and
performing (860) said second transcoding session, wherein said second transcoding session is based at least in part on said intermediate data,
wherein the second transcoding session results in a further reduction of one attribute of the input video that was reduced by said first transcoding session, **characterized in that** %
said second transcoding session selectively uses metadata produced in decoding video data in the first transcoding session to feed into an encoding portion of the second transcoding session.

2. The method as recited in Claim 1 further comprising determining (830) which said intermediate data of said first transcoding session to store.

3. The method as recited in Claim 1 wherein one of said first attributes is associated with a screen size reduction of a first downscaling factor and wherein said corresponding second attribute is associated with a screen size reduction of a second downscaling factor, wherein said second downscaling factor provides a greater screen size reduction than said first downscaling factor.

4. The method as recited in Claim 3 wherein said intermediate data comprises a result of a screen size reduction operation based on said first downscaling factor.

5. The method as recited in Claim 1 wherein one of said first attributes is associated with a bit rate reduction of a first bit rate reduction factor and wherein said corresponding second attribute is associated with a bit rate reduction of a second bit rate reduction factor, wherein said second bit rate reduction factor provides a greater bit rate reduction than said first bit rate reduction factor.

6. The method as recited in Claim 5 wherein said intermediate data comprises a result of a bit rate reduction operation based on said first bit rate reduction factor.

7. The method as recited in Claim 6 wherein said intermediate data further comprises a coded block pattern.

8. The method as recited in Claim 7 wherein said performing said second transcoding session further comprises:
determining whether said coded block pattern is equal to zero; and
provided said coded block pattern is equal to zero, not performing drift correction and error accumulation on said intermediate data.

## Patentansprüche

1. Verfahren zum Generieren mehrerer transcodierter Ausgaben auf Grundlage einer einzelnen Videoeingabe, wobei das Verfahren umfasst:
Einleiten (810), in Reaktion auf das Empfangen einer ersten Anforderung einer ersten Ausgabe an eine erste Vorrichtung, einer ersten Transcodierungssitzung zum Transcodieren der Videoeingabe in ein Format zum Betrachten auf der ersten Vorrichtung, die erste Attribute aufweist, die bestimmte Videoeingabevoraussetzungen der ersten Vorrichtung beschreiben, wobei die erste Transcodierungssitzung eine Vielzahl von Videoverarbeitungsvorgängen umfasst, darunter Decodieren von Videodaten, Durchführen eines Transcodierungsvorgangs und Codieren der Videodaten;
Einleiten (820), in Reaktion auf das Empfangen einer zweiten Anforderung einer zweiten Ausgabe an eine zweite Vorrichtung, einer zweiten Transcodierungssitzung zum Transcodieren der Videoeingabe in ein anderes Format, das der zweiten Vorrichtung zugehörig ist, die zweite Attribute aufweist, die die bestimmten Videoeingabevoraussetzungen der zweiten Vorrichtung beschreiben;
Erzeugen (840) wenigstens eines Zwischendatensatzes, der dem Transcodierungsvorgang der ersten Transcodierungssitzung zugehörig ist;
Speichern (850) des Zwischendatensatzes; und
Durchführen (860) der zweiten Transcodierungssitzung, wobei die zweite Transcodierungssitzung wenigstens teilweise auf dem Zwischendatensatz beruht,
wobei die zweite Transcodierungssitzung zu einer weiteren Reduzierung von einem Attribut des Eingabevideos führt, das durch die erste Transcodierungssitzung reduziert wurde, **dadurch gekennzeichnet, dass**
die zweite Transcodierungssitzung selektiv Metadaten verwendet, die beim Decodieren von Videodaten in der ersten Transcodierungssitzung erzeugt werden, um sie in einen Codierungsabschnitt der zweiten Transcodierungssitzung einzuspeisen.

2. Verfahren nach Anspruch 1, ferner umfassend Bestimmen (830), welcher Zwischendatensatz der ersten Transcodierungssitzung gespeichert werden soll.

3. Verfahren nach Anspruch 1, wobei eins der ersten Attribute einer Bildschirmgrößenreduzierung mit einem ersten Abwärtsskalierungsfaktor zugehörig ist und wobei das entsprechende zweite Attribut einer Bildschirmgrößenreduzierung mit einem zweiten Abwärtsskalierungsfaktor zugehörig ist, wobei der zweite Abwärtsskalierungsfaktor eine größere Bildschirmgrößenreduzierung als der erste Abwärtsskalierungsfaktor bereitstellt.

4. Verfahren nach Anspruch 3, wobei der Zwischendatensatz ein Ergebnis eines Bildschirmgrößenreduzierungsvorgangs auf Grundlage des ersten Abwärtsskalierungsfaktors umfasst.

5. Verfahren nach Anspruch 1, wobei eins der ersten Attribute einer Bitratenreduzierung mit einem ersten Bitratenreduzierungsfaktor zugehörig ist und wobei das entsprechende zweite Attribut einer Bitratenreduzierung mit einem zweiten Bitratenreduzierungsfaktor zugehörig ist, wobei der zweite Bitratenreduzierungsfaktor eine größere Bitratenreduzierung als der erste Bitratenreduzierungsfaktor bereitstellt.

6. Verfahren nach Anspruch 5, wobei der Zwischendatensatz ein Ergebnis eines Bitratenreduzierungsvorgangs auf Grundlage des ersten Bitratenreduzierungsfaktors umfasst.

7. Verfahren nach Anspruch 6, wobei der Zwischendatensatz ferner ein codiertes Blockmuster umfasst.

8. Verfahren nach Anspruch 7, wobei das Durchführen der zweiten Transcodierungssitzung ferner umfasst:
Bestimmen, ob das codierte Blockmuster gleich null ist; und
sofern das codierte Blockmuster gleich null ist, kein Durchführen einer Driftkorrektur und Fehlerakkumulation an dem Zwischendatensatz.

## Revendications

1. Procédé de génération de sorties transcodées multiples sur la base d'un unique signal vidéo d'entrée, ledit procédé comprenant :
l'initiation (810) en réponse à la réception d'une première demande pour une première sortie à un premier dispositif d'une première session de transcodage pour transcoder le signal vidéo d'entrée en un format de visualisation sur le premier dispositif ayant des premiers attributs décrivant des exigences de signal vidéo d'entrée particulières du premier dispositif, ladite première session de transcodage comprenant une pluralité d'opérations de traitement vidéo comportant le décodage de données vidéo, la réalisation d'une opération de transcodage et le codage des données vidéo ;
l'initiation (820) en réponse à la réception d'une seconde demande pour une seconde sortie à un second dispositif d'une seconde session de transcodage pour transcoder le signal vidéo d'entrée en un format différent associé au second dispositif ayant des seconds attributs décrivant les exigences de signal vidéo d'entrée particulières du second dispositif ;
la production (840) d'au moins des données intermédiaires associées à ladite opération de transcodage de ladite première session de transcodage ;
le stockage (850) des données intermédiaires ; et
la réalisation (860) de ladite seconde session de transcodage, ladite seconde session de transcodage étant basée au moins en partie sur lesdites données intermédiaires,
la seconde session de transcodage conduisant à une réduction supplémentaire d'un attribut du signal vidéo d'entrée qui a été réduit par ladite première session de transcodage, **caractérisé en ce que**
ladite seconde session de transcodage utilise sélectivement des métadonnées produites dans le décodage de données vidéo dans la première session de transcodage à introduire dans une partie de codage de la seconde session de transcodage.

2. Procédé selon la revendication 1, comprenant en outre la détermination (830) desdites données intermédiaires de ladite première session de transcodage à stocker.

3. Procédé selon la revendication 1, dans lequel l'un desdits premiers attributs est associé à une réduction de taille d'écran d'un premier facteur de réajustement et ledit second attribut correspondant étant associé à une réduction de taille d'écran d'un second facteur de réajustement, ledit second facteur de réajustement fournissant une réduction de taille d'écran supérieure audit premier facteur de réajustement.

4. Procédé selon la revendication 3, dans lequel lesdites données intermédiaires comprennent un résultat d'une opération de réduction de taille d'écran sur la base dudit premier facteur de réajustement.

5. Procédé selon la revendication 1, dans lequel l'un desdits premiers attributs est associé à une réduction de débit binaire d'un premier facteur de réduction de débit binaire et ledit second attribut correspondant étant associé à une réduction de débit binaire d'un second facteur de réduction de débit binaire, ledit second facteur de réduction de débit binaire fournissant une réduction de débit binaire supérieure audit premier facteur de réduction de débit binaire.

6. Procédé selon la revendication 5, dans lequel lesdites données intermédiaires comprennent un résultat d'une opération de réduction de débit binaire sur la base dudit premier facteur de réduction de débit binaire.

7. Procédé selon la revendication 6, dans lequel lesdites données intermédiaires comprennent en outre un motif de bloc codé.

8. Procédé selon la revendication 7, dans lequel ladite réalisation de ladite seconde session de transcodage comprend en outre :
le fait de déterminer si ledit motif de bloc codé est égal à zéro ; et
à condition que ledit motif de bloc codé soit égal à zéro, la non-réalisation d'une correction de dérive et d'une accumulation d'erreur sur lesdites données intermédiaires.
